# EUROPEAN PATENT SPECIFICATION

(11) **EP 0 899 640 B1**
(45) Date of publication and mention of the grant of the patent: **26.11.2003**
(21) Application number: 98202474.7
(22) Date of filing: 23.07.1998
(51) Int. Cl.: G05B 19/42

(54) **A method of determining the cutting outlines of hides**
Verfahren zur Bestimmung eines Lederschnittmusters
Méthode de détermination du contour de cuir à couper

(30) Priority: 26.08.1997 IT PD970186
(43) Date of publication of application: 03.03.1999
(73) Proprietor: Balsira S.A., Roveredo, Grigioni (CH)
(72) Inventor: Palmieri, Claudio, 6821 Rovio/Ticino (CH); Johnston, Christopher C., New Orleans (US)
(74) Representative: Cantaluppi, Stefano

(56) References cited:
- EP-A- 0 762 251
- US-A- 4 583 181
- US-A- 4 758 960
- US-A- 4 901 359
- US-A- 4 982 437
- US-A- 5 258 917

## Description

The present invention relates to a method of determining the cutting outlines of hides in an industrial environment, according to the preamble of the main claim n. 1.

In this specific field, methods of cutting hides automatically are known; in these methods, the outline of the hide is plotted beforehand and stored in digital form for subsequent analysis, for example, in order to measure its area or for other analysis or "nesting" operations and, finally, for transfer to stations provided for performing cutting operations on the hide. The term "nesting" is intended to define the function of determining the optimal locations of the outlines of the parts to be cut out, taking into account the profile of the hide or of the portions considered useful for cutting.

Methods for cutting hides as outlined above are also known from EP-A 0762251 and US 4758960.

Since hides may have structural or material defects and particularly defects in the geometrical shape of their outlines such as, for example, indentations, projections, or holes within the outline, an operation to trim the outline is normally necessary to eliminate imperfections and defects which are not acceptable in the subsequent nesting and cutting operations. One of the basic problems is that of determining an outline of the hide which is considered useful for cutting, taking account of these defects or unusable portions of the hide in order to optimize the use made of the material and to minimize waste.

A method of cutting hides known from United States patent No. 5,258,917 provides for the presence of any defects of the hide to be detected by means of a video-camera scanning device and for a different colour or colour shade to be assigned to each type of detect found and to the respective degree of imperfection. However, a method of this type requires the use of high-resolution scanning devices and associated apparatus for controlling the images and the colour shades, which may render the process of scanning the hide and identifying the cutting outline quite complex.

The problem upon which the present invention is based is that of providing a method by means of which it is possible automatically to scan the outline of the hide and the regions within the outline and to determine a useful cutting outline which enables the outlines of the parts to be cut out during the subsequent nesting and cutting steps to be located in an optimal manner, taking account of the defects and of the degrees of imperfection which are acceptable for these defects.

The invention, which has the specific characteristics recited in the following claims, is based on the identification of sets of geometrical parameters which identify the different types of defects which may be found in the hide, and on the provision of algorithms which enable the outline of the hide to be scanned, the particular type of defect to be identified, the values adopted by the parameters to be compared with values predetermined in dependence on the acceptable degree of imperfection, and a new profile of the useful cutting outline, free of defects which are unacceptable for subsequent nesting and hide-cutting steps, to be calculated on the basis of these comparisons.

Moreover, according to the method of the invention, the predetermined values of the geometrical parameters which characterize the degree of imperfection of each defect can advantageously be set by the operator according to various intended uses of the hide so as to optimize the use made of the material and to minimize waste.

Further characteristics and advantages of the invention will become clearer from the following detailed description of a preferred but non-limiting embodiment thereof, given with reference to the appended drawings, in which:
Figure 1 is a schematic plan view of a hide to be analysed in order to determine the useful cutting outline by the method of the present invention, and
Figure 2 is a view of a detail of the outline of the hide of Figure 1, on an enlarged scale.

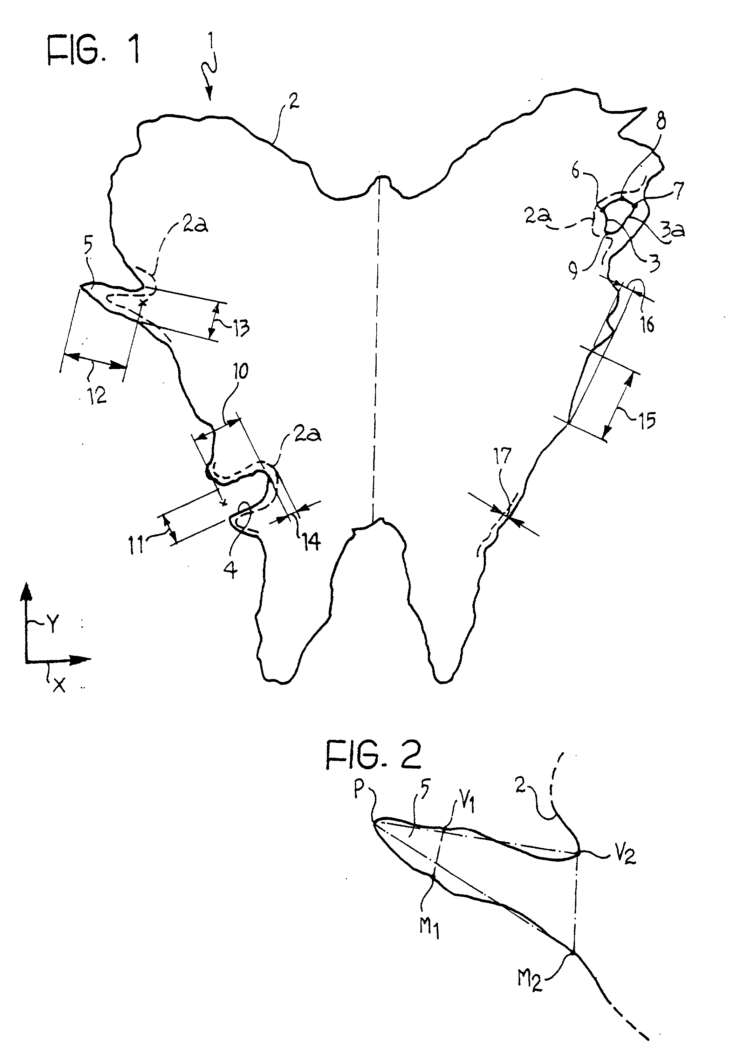

With reference to Figure 1, a hide, indicated 1, has a generally irregular outline 2. It is possible to identify on the surface of the hide defects or irregularities in the outline 2, for example, a hole 3 within the outline 2, an indentation or recess 4, and a pointed projection or appendage 5, which constitute portions which are generally not usable for subsequent working of the hide.

A first step of the method according to the invention provides for the hide 1 to be placed in an analysis (measuring) station in which the outline 2 and any other outlines such as, for example, the outline 3a of the hole 3, are plotted by means of a scanning device such as a video camera. This step provides for the detection of the coordinates (x, y) of a significant number of points of the outline 2 relative to the axes X and Y of a preselected Cartesian reference system. For example, points taken at intervals equivalent to a predetermined spacing of points on the outline plotted by scanning may be considered as significant points. Once the profile of the outline 2 has been detected, it is transmitted and stored in digital form (for example, in the form of a respective file) in a processing unit, not shown in the drawings.

The method also provides for respective geometrical parameters to be determined for each of the above-mentioned defects, whether they be holes, projections or indentations of the outline 2, these parameters being selected so as to identify and characterize the corresponding defect. For example, for the hole 3, the coordinates of four points, indicated 6, 7, 8 and 9 on its outline 3a are identified and constitute, relative to the preselected reference system, as seen in Figure 1, the points farthest to the left and farthest to the right, and the uppermost and lowermost points of the outline 3a. The components, indicated DX and DY, along the X and Y axes, of the distance between each point of the outline 2 and the four points 6-9 of the hole 3 are selected as parameters characteristic of the hole 3.

In the case of the indentation 4, the characteristic parameters selected are the depth and the width of the indentation, the measurements of which are indicated 10 and 11, respectively, in Figure 1. Similarly, for the projection 5, the characteristic parameters selected are the height and base parameters identifiable on the projection, the measurements of which are indicated 12 and 13 in Figure 1.

The values of the aforementioned geometrical parameters can be selected and set and are stored in a respective file (a file of working parameters) in the processing unit. Each set of values set can therefore correspond to different degree of imperfection considered acceptable for each of the aforementioned defects.

For each of the defects, a respective algorithm, otherwise defined as a search routine, by means of which the outline 2 is scanned, for example, by comparing the coordinates (x, y) of the preselected number of points on the outline taken in succession so as to identify the presence or absence of the aforementioned defects along the outline 2, is also stored in the processing unit in digital form.

For example, in the case of the projection 5, the algorithm provides, first of all, for the coordinates of the point located at the tip of the projection, indicated P in Figure 2, to be plotted. In a subsequent step of the algorithm, for each pair of a series of points M1, V1, M2, V2, etc., taken upstream and downstream of the point P along the outline of the projection 5, the triangles having the sets of three points P, M1, V1, P, M2, V2, etc., for vertices are determined and the height and base parameters 12, 13 of the projection 5 are calculated for each of the triangles. From a comparison of the values of the parameters with those stored in the file of working parameters, the algorithm can recognize whether or not the defect detected falls within acceptable values, that is, whether it should be excluded from the outline of the hide, as will be explained further below.

The algorithm provided for identifying indentations along the outline 2 is based, at least in principle, on the same logic of triangulations of points and subsequent comparison of the coordinates (x, y) of the vertices of the triangles as is provided for in the above-described algorithm for finding projections.

Once the presence of one of the aforementioned defects has been identified on the outline 2, the method then provides for the values of the above-mentioned geometrical parameters to be calculated by means of the corresponding algorithm and compared with the corresponding preselected values for these parameters stored in the file of working parameters.

For example, once the hole 3 has been identified by scanning of the outline with the corresponding algorithm, the components of the distance DX and DY between each of the points 6-9 and the points of the outline 2 are calculated by means of the algorithm. If at least one of the points 6-9 has a distance DX or DY less than the corresponding value stored in the file of working parameters, the algorithm provides for the outline 2 in the vicinity of the hole 3 to be recalculated without the hole, since the hole is recognized as an unacceptable defect. Naturally, the exclusion of the hole 3 depends upon the selection of the values of the parameters DX and DY set by the operator, which can be selected, for example, within predetermined ranges of values.

In the case of the projection 5, once the presence of this defect has been identified by the corresponding algorithm, the height and base dimensions 12 and 13 are calculated by means of the algorithm and are compared with the values stored in the file of working parameters. If the calculated values of the height 12 and of the base 13 are greater than and less than the respective reference values stored in the file of working parameters, respectively, the algorithm provides for the outline 2 to be recalculated with the exclusion of the points belonging to the projection 5 and their replacement by a straight line joining up the outline 2. The projection 5 is thus considered unacceptable and is excluded from the useful cutting outline of the hide 1.

In substantially similar manner, in the case of the indentation 4, once the presence of this defect has been identified by the corresponding search algorithm, the depth and width parameters 10 and 11 are calculated by means of the algorithm and are compared with the reference values stored in the file of working parameters. If the parameters calculated do not satisfy the conditions set by the algorithm, the outline 2 in the region of the indentation is recalculated, each point of the indentation 4 being displaced inwardly relative to the hide to an extent, indicated 14 in the drawing, which can also be stored in the file of working parameters.

The method also provides for the use of an algorithm for scanning the outline 2 to identify portions of the outline which are substantially straight and do not need any trimming operations. In particular, the length, indicated 15 in the drawing, of a series of points of the outline 2 in which a deviation 16 from a straight line can be identified is defined as the characteristic parameter. Both the length parameter 15 and the deviation parameter 16 can be set and stored in the file of working parameters and may be preselected by the operator within predetermined ranges. Preferably, there is one algorithm which can scan straight portions of the outline 2 arranged parallel to the axes X and Y and a second algorithm arranged for scanning portions of the outline 2 which are inclined to the reference axes. In both cases, if the length parameter 15 calculated by the algorithm and corresponding to the predetermined deviation 16 is greater than the reference length (stored in the file of working parameters), the straight portion is considered acceptable and the original outline 2 is not recalculated. Conversely, if the portion scanned does not satisfy the conditions set by the algorithm, the outline 2 is recalculated thereby in a manner such that it falls within the limits of the preselected deviation 16 from a straight line.

Once the aforementioned defects have been identified and the outline 2 has been recalculated where necessary, the method provides for a further outline-analysis step by which a displacement or shrinkage, the magnitude of which is indicated 17 in the drawing, is applied to each point of the outline 2. The shrinkage parameter 17 can also be stored in the file of working parameters and can be selected and set by the operator from values included in a predetermined range.

A final outline 2a, which is indicated in broken outline in the drawings, and which is free of the aforementioned defects and is such as to optimize the area of the hide and minimize waste, is thus obtained. The new outline 2a is stored in digital form in the respective file and can be transmitted to subsequent stations for the steps of nesting and cutting of the hide. The outline 2a can be associated with the hide 1 analysed by the assignation of a digital code and can be put in a digital archive or database from which it can subsequently be retrieved for further steps in the processing of the hide. As a result, the cutting step and any nesting of the hide can be carried out later or in subsequent steps and in any case in steps distinct from the step of determining the useful cutting outline according to the invention, and may therefore even be performed after a time interval and/or in locations in plants situated far apart.

## Claims

1. A method of determining the cutting outlines (2a) of hides (1) comprising the step of:
- plotting the outline (2) of the hide by determining the coordinates (x, y) of a preselected number of points on the outline (2) and/or of points within the outline and storing the coordinates in a processing unit, **characterised in** further comprising the steps of:
- preselecting sets of geometrical parameters which identify respective defects and/or unusable portions of the hide (1) which can be identified on the outline(2) and/or within the hide such as, for example, indentations (4), projections (5), holes (3) and the like,
- creating a database containing predetermined values for the said geometrical parameters, preselected in dependence on the degree of imperfection permitted for each of the defects,
- providing, for each defect, a respective algorithm with which the coordinates of the points on the outline (2) of the hide are compared in order to identify the defects or unusable portions along or within the outline, and to calculate the value adopted by the parameters for each defect identified,
- comparing the values calculated for the geometrical parameters with the corresponding values stored in the database so as to identify regions of the hide having defects with unacceptable degrees of imperfection and
- recalculating in these regions the coordinates of the outline, free of these defects, the outline (2) thus calculated and stored in the processing unit constituting the cutting outline of the hide which optimizes the total area thereof and minimizes waste.

2. A method according to Claim 1, in which the values of the geometrical parameters which identify the defects or unusable portions of the hide are set by the operator in the processing unit and can therefore adopt different values in dependence on the degree of imperfection considered acceptable in the outline of the hide.

3. A method according to Claim 2, in which the values of the geometrical parameters can be selected from values included within predetermined ranges.

4. A method according to any one of the preceding claims, in which the defects which can be identified in the hide (1) comprise indentations (4) in the outline (2), geometrical parameters defining a depth (10) and a width (11) of the indentation (4) being associated with the indentations and the corresponding algorithm provided for finding the said indentations in the outline being arranged to calculate the values adopted by the depth and width parameters and to compare them with the values stored in the database.

5. A method according to any one of Claims 1 to 3, in which the defects which can be detected in the hide comprise projections (5) in the outline (2), geometrical parameters defining a height (12) and a base (13) of the projections being associated with the projections and the corresponding algorithm provided for finding the said projections in the outline being arranged to calculate the values adopted by the height and base parameters of the projection and to compare them with the values stored in the database.

6. A method according to any one of Claims 1 to 3, in which the defects which can be identified in the hide comprise holes (3) within the outline (2) of the hide (1), the corresponding algorithm provided for finding the said holes being arranged to identify at least four points (6, 7, 8, 9) on the outline (3a) having extreme coordinates relative to a preselected system of reference axes (x, y) and to calculate, as geometrical parameters characteristic of the holes (3), the components (Dx, Dy) of the distances, along the axes, between each of the points on the outline (3a) of the hole (3) and the points of the external outline (2) of the hide.

7. A method according to any one of the preceding claims, which provides for the identification of substantially straight portions of the outline (2) of the hide(1), the length (15) of a series of points of the outline for which a predetermined deviation (16) from a straight line can be identified being associated with the said portions as a characteristic geometrical parameter, and the length (15) and deviation (16) parameters being calculated by the corresponding algorithm and compared with the respective values stored in the database.

## Patentansprüche

1. Verfahren zur Bestimmung des Schnittmusters (2a) für eine Lederhaut (1) umfassend folgende Schritte:
Erfassen der Außenkontur (2) der Lederhaut durch Bestimmen der Koordinaten einer vorbestimmten Anzahl von Punkten auf der Außenkontur (2) und/oder einer vorbestimmten Anzahl von Punkten innerhalb der Außenkontur und Speichern der Koordinaten in einer Verarbeitungseinrichtung, **dadurch gekennzeichnet, dass** das Verfahren weiterhin umfasst:
Vorauswahl einer Anzahl von geometrischen Parametern, die Fehler und/oder unbrauchbare Bereiche der Lederhaut (1) identifizieren, welche an der Außenkontur (2) oder in der Lederfläche erfasst werden können, wie z.B. Einbuchtungen (4), Vorsprünge (5), Löcher (3) und ähnliches,
Erstellen einer Datenbank enthaltend vorbestimmte Werte für besagte geometrische Parameter, vorausgewählt in Abhängigkeit vom Grad der zulässigen Unvollkommenheit für jeden dieser Fehler,
Bereitstellen eines Algorithmus für jeden dieser Fehler , mit dessen Hilfe die Koordinaten der Punkte auf der Außenkontur (2) der Lederhaut verglichen werden, um die Fehler oder unbrauchbaren Stellen entlang oder innerhalb der Außenkontur zu identifizieren und um die Werte, die durch die zugehörigen Parameter für jeden identifizierten Fehler bestimmt werden, zu berechnen,
Vergleichen der berechneten Werte für die geometrischen Parameter mit den entsprechenden, in der Datenbank gespeicherten Werten, um die Bereiche der Lederhaut zu bestimmen, die Fehler mit unakzeptablem Grad von Unvollkommenheit aufweisen und
Neuberechnen der Koordinaten der Außenkontur in diesen Bereichen, die frei von diesen Fehlern sind, wobei die so berechnete und in der Verarbeitungseinrichtung gespeicherte Außenkontur (2) das Schnittmuster der Lederhaut darstellt, das deren gesamte Fläche optimiert und Abfall minimiert.

2. Verfahren nach Anspruch 1, wobei die Werte der geometrischen Parameter, die Fehler oder unbrauchbare Stellen identifizieren, vom Bediener in der Verarbeitungseinrichtung gesetzt werden und deshalb verschiedene Werte annehmen können in Abhängigkeit vom Grad der als zulässig angesehenen Unvollkommenheit der Außenkontur der Lederhaut.

3. Verfahren nach Anspruch 2, wobei die Werte der geometrischen Parameter aus Bereichen vorbestimmter Werte ausgewählt werden können.

4. Verfahren nach einem der vorstehenden Ansprüche, bei dem die Fehler, die in der Lederhaut (1) identifiziert werden können, Einbuchtungen (4) in der Außenkontur (2) umfassen, wobei geometrische Parameter die Tiefe (10) und Breite (11) der Einbuchtung (4) bestimmen, und wobei der entsprechende Algorithmus zum Auffinden solcher Einbuchtungen in der Außenkontur so eingerichtet ist, dass die durch Tiefen- und Breitenparameter bestimmten Werte berechnet und mit den in der Datenbank gespeicherten Werten verglichen werden.

5. Verfahren nach einem der Ansprüche 1 bis 3, bei dem die Fehler, die in der Lederhaut (1 ) identifiziert werden können, Vorsprünge (5) in der Außenkontur (2) umfassen, wobei geometrische Parameter die Höhe (12) und Basis (13) des Vorsprungs bestimmen, und wobei der entsprechende Algorithmus zum Auffinden solcher Vorsprünge in der Außenkontur so eingerichtet ist, dass die durch Höhen- und Basisparameter bestimmten Werte berechnet und mit den in der Datenbank gespeicherten Werten verglichen werden.

6. Verfahren nach einem der Ansprüche 1 bis 3, bei dem die Fehler, die in der Lederhaut identifiziert werden können, Löcher (3) innerhalb der Außenkontur (2) der Lederhaut (1) umfassen, wobei der entsprechende Algorithmus zum Auffinden solcher Löcher so eingerichtet ist, dass wenigstens vier Punkte (6, 7, 8, 9) auf der Kontur (3a) bestimmt werden, die extreme Koordinaten in Bezug auf ein vorbestimmtes System von Bezugsachsen (x, y) aufweisen und wobei als für Löcher (3) charakteristische geometrische Parameter die Entfemungskomponenten (Dx, Dy) entlang der Achsen zwischen allen Punkten der Kontur (3a) des Lochs (3) und den Punkten der Außenkontur (2) der Lederhaut berechnet werden.

7. Verfahren nach einem der vorstehenden Ansprüche, wobei zur Identifizierung von im wesentlichen geraden Bereichen der Außenkontur (2) der Lederhaut (1) die Länge (15) der Serie von Punkten der Außenkontur, für die in besagtem Bereich eine vorbestimmte Abweichung (16) von einer geraden Linie festgestellt werden kann, als charakteristischer Parameter bestimmt wird und wobei die Längen- (15) und die Abweichungs- (16) Parameter mit Hilfe der entsprechenden Algorithmen berechnet und mit den in der Datenbank gespeicherten Werten verglichen werden.

## Revendications

1. Procédé pour déterminer les contours de découpe (2a) de peaux (1 ) comprenant l'étape de :
- tracer le contour (2) de la peau en déterminant les coordonnées (x, y) d'un nombre présélectionné de points sur le contour (2) et/ou de points à l'intérieur du contour et stocker les coordonnées dans une unité de traitement,
**caractérisé en ce qu'**il comprend de plus les étapes de :
- présélectionner des ensembles de paramètres géométriques qui identifient des défauts respectifs et/ou des parties inutilisables de la peau (1 ) qui peuvent être identifiés sur le contour (2) et/ou dans la peau tels que, par exemple, des indentations (4), des saillies (5), des trous (3) et analogues,
- créer une base de données contenant des valeurs prédéterminées pour lesdits paramètres géométriques, présélectionnées en fonction du degré d'imperfection permis pour chacun des défauts,
- fournir, pour chaque défaut, un algorithme respectif avec lequel les coordonnées des points sur le contour (2) de la peau sont comparées de façon à identifier les défauts ou les parties inutilisables le long ou dans le contour, et à calculer la valeur adoptée par les paramètres pour chaque défaut identifié,
- comparer les valeurs calculées pour les paramètres géométriques avec les valeurs correspondantes stockées dans la base de données de façon à identifier des régions de la peau ayant des défauts avec des degrés inacceptables d'imperfection, et
- recalculer dans ces régions les coordonnées du contour, dépourvues de ces défauts, le contour (2) ainsi calculé et stocké dans l'unité de traitement constituant le contour de découpe de la peau qui optimise la surface totale de celle-ci et minimise le rebut.

2. Procédé selon la revendication 1, dans lequel les valeurs des paramètres géométriques, qui identifient les défauts ou les parties inutilisables de la peau, sont établies par l'opérateur dans l'unité de traitement et peuvent donc prendre différentes valeurs en fonction du degré d'imperfection considéré acceptable dans le contour de la peau.

3. Procédé selon la revendication 2, dans lequel les valeurs des paramètres géométriques peuvent être sélectionnées à partir de valeurs incluses dans des fourchettes prédéterminées.

4. Procédé selon l'une quelconque des revendications précédentes, dans lequel les défauts, qui peuvent être identifiés dans la peau (1 ), comprennent des indentations (4) dans le contour (2), des paramètres géométriques définissant une profondeur (10) et une largeur (11 ) de l'indentation (4) étant associés aux indentations et l'algorithme correspondant prévu pour trouver lesdites indentations dans le contour étant adapté pour calculer les valeurs prises par les paramètres de profondeur et de largeur et pour les comparer avec les valeurs stockées dans la base de données.

5. Procédé selon l'une quelconque des revendications 1 à 3, dans lequel les défauts, qui peuvent être détectés dans la peau, comprennent des saillies (5) dans le contour (2), des paramètres géométriques définissant une hauteur (12) et une base (13) des saillies étant associés aux saillies et l'algorithme correspondant prévu pour trouver lesdites saillies dans le contour étant adapté pour calculer les valeurs prises par les paramètres de hauteur et de base de la saillie et pour les comparer avec les valeurs stockées dans la base de données.

6. Procédé selon l'une quelconque des revendications 1 à 3, dans lequel les défauts, qui peuvent être identifiés dans la peau, comprennent des trous (3) dans le contour (2) de la peau (1), l'algorithme correspondant prévu pour trouver lesdits trous étant adapté pour identifier au moins quatre points (6, 7, 8, 9) sur le contour (3a) ayant des coordonnées extrêmes par rapport à un système présélectionné d'axes de référence (x, y) et pour calculer, comme paramètres géométriques caractéristiques des trous (3), les composantes (Dx, Dy) des distances, le long des axes, entre chacun des points sur le contour (3a) du trou (3) et les points du contour externe (2) de la peau.

7. Procédé selon l'une quelconque des revendications précédentes, qui fournit l'identification de parties sensiblement droites du contour (2) de la peau (1 ), la longueur (15) d'une série de points du contour pour laquelle une déviation prédéterminée (16) d'une ligne droite peut être identifiée, étant associée auxdites parties comme un paramètre géométrique caractéristique, et les paramètres de longueur (15) et de déviation (16) étant calculés par l'algorithme correspondant et comparés aux valeurs respectives stockées dans la base de données.
